# EUROPEAN PATENT SPECIFICATION

(11) **EP 4 244 048 B1**
(45) Date of publication and mention of the grant of the patent: **05.03.2025**
(21) Application number: 21827702.8
(22) Date of filing: 12.11.2021
(51) Int. Cl.: B29D 30/06

(54) **MOULD AND METHOD FOR MOULDING DOUBLE CURVED ELEMENTS OF ELASTOMERIC MATERIAL**
FORMWERKZEUG UND VERFAHREN ZUM FORMEN VON DOPPELT GEKRÜMMTEN ELEMENTEN AUS ELASTOMEREM MATERIAL
MOULE ET PROCÉDÉ DE MOULAGE D'ÉLÉMENTS À DOUBLE COURBURE EN MATÉRIAU ÉLASTOMÈRE

(30) Priority: 12.11.2020 NO 20201223
(43) Date of publication of application: 20.09.2023
(73) Proprietor: Retyre AS, 1400 Ski (NO)
(72) Inventor: AMUNDSEN, Paul Magne, 1412 Sofiemyr (NO); HOFSET, Tarjei, 6230 Sykkylven (NO); MARVIK, Olaf Brage, 1358 Jar (NO)
(74) Representative: Acapo AS
(86) International application number: PCT/NO2021/050236
(87) International publication number: WO 2022/103274

(56) References cited:
- RU-C1- 2 457 950
- US-B2- 8 632 715

## Description

The present invention relates to a mould and a method for moulding double curved elements of elastomeric material, and an elastomeric element being moulded in the mould according to the preamble of the enclosed claims.

### Background of the invention.

A tire for a vehicle comprises in general plies; beads; belts; sidewalls; shoulders; tread; and sipes and grooves. Sidewalls are the area of rubber that runs from the bead to the treads and gives the tire lateral stability, and treads are the area of the tire where the rubber meets the road, providing both a cushion and grip. Sipes and grooves are patterns of the tire tread that allow the tire to disperse water, snow and mud. Sipes are the smaller grooves or cuts to give extra grip, which is especially important in a tire made for snow and ice.

A tire for bicycles comprises similarly a casing, covered by a rubber and provided with a bead for attachment to a rim. The bicycle tire casing provides the necessary resistance against stretching to contain the internal air pressure while remaining flexible enough to conform to the ground surface. The tread is a part of the tire that touches the ground during regular use, as described above. The profile of the tread is curved both laterally across the tire, a crosswise arc, and longitudinally along the circumference of the tire, matching the shape of the casing inside it and allowing the tire to roll to the side as the bicycle leans for turning or balancing. The sidewalls of the casing, i.e. the part on each side extending between the tread and the bead are not being intended to contact the ground. This part of the tire may be referred to as a side of the tire.

One bicycle may be used for different purposes, and thus several types of treads might be desirable for instance to get improved grip on rough surfaces, and/or to reduce rolling resistance on smooth surfaces. Further, if the bicycle is used during winter, the tread should be provided with spikes, to prevent slipping or skidding. Replaceable tire treads are known for instance from EP 3423296 and from Retyre^{™}.

Such treads have double curvature; they are curved laterally to cover the whole tread area of a bicycle tire and to extend from one sidewall across the tread and to the other sidewall, and they are curved longitudinally to fit onto circumference of the tire or wheel. Even if the tire tread is a longitudinal element, and even if it may be stretched to fit onto the tire, it will not give a sufficiently close fit unless it is moulded in a curve corresponding to the tire.

Methods for moulding and curing of elastomeric materials in moulds to make elastomeric products such as tires and tire treads, are well known. Typically, a material to be cured is placed in a mould and subjected to pressure and/or heat until a predetermined amount of cross-linking between molecules has been achieved. The cured article is then removed from the mould. A traditional way to manufacture tire treads for retreading of car tires is to use a flat mould, containing protrusions and recesses to form tread patterns extending longitudinally and laterally on the tread. However, when the flat tread is attached to a round tire, the tread pattern deforms and grooves extending laterally across the tread will open or expand, which will affect the road grip of the tread.

When manufacturing tires, it is traditionally used round moulds utilizing an expandable rubber airbag as the inner element of the mould to press the material into the protrusions and recesses of an outer metal element, to create sipes and grooves in the tire. This gives less precision in the casting process and a higher rate of defects, and the expanding airbag has a low pressure of about 1,3 MPa. Further, the outer element of a round mould is commonly comprised of two sections separated longitudinally in the centre of the tread. When these sections are separated, demoulding defects such as tearing may occur. The production normally takes 11 distinct steps where 5 are manual.

US 8,632,715 describes a flat mould and a method for moulding tire treads, wherein a tread is moulded in a substantially flat or planar manner while still being able to obtain the desired dimensions of the tread pattern when the tire tread is mounted onto a tire. The moulded tire treads are, however, only curved longitudinally and will not fit close onto a tire having a laterally curved tread, such as a bicycle or motorbike tire.

A skilled person would acknowledge that elastomeric materials are elastic, meaning that even if a tire tread is not a perfect fit, it may be stretched while mounting and will behave as a perfect fit. However, stretching requires great strength and a user may not be able to mount the tire tread. Further, the sipes and grooves will be disturbed by the stretching, and the grip of the tire tread may be changed. Further, if a carcass is part of the tire tread, stretching will not be possible.

Based on the above, there is an object of the present invention to provide a mould and a method for moulding longitudinal, double curved elements of elastomeric materials, without the above said disadvantages.

Further, there is an object to provide a mould and a method for moulding such elements having a precise size and thickness, and further that the elements should have a precise curvature in two directions.

Even further, there is an object that the mould should be flat on the outside, that the mould could be arranged on a plane surface, and that the length of the mould can be chosen both shorter and longer than the desired element. To improve the efficiency of the moulding process, it is a further object that more treads should be moulded simultaneously, preferably in the same mould.

Even further, there is an object to provide a mould and a method for moulding such elements to be used as tires or tire treads, having a precise pattern on at least one surface.

Finally, there is an object that the mould and method should be time and cost efficient, less space demanding and safe and easy to operate for an operator.

### Summary of the invention

The above said objects of the invention is achieved by a mould and a method for forming a longitudinal element of elastomeric material, according to the characterizing part of the independent claims. A number of non-exhaustive embodiments, variants or alternatives of the invention are defined by the corresponding dependent claims.

The invention relates to a mould for forming a longitudinal element of elastomeric material, the mould comprises a housing including at least one inner longitudinal cavity extending between at least two opposing main walls and two opposing edge walls. The element is to be formed inside the cavity. The mould is characterized in that the main walls of the cavity have elevations extending and sloping both laterally and longitudinally of the cavity, and depressions extending and sloping laterally and longitudinally of the mould, wherein an elevation of one wall is opposite to a depression of the other wall. The element being formed in the mould will be curved in both lateral and longitudinal direction, which is also referred to as double curved.

By "longitudinal cavity" it is herein meant that the cavity is longer in one direction, and when referring to "longitudinal" it is meant along the longest direction, and when it is referred to "lateral" it is meant along the shortest direction, being perpendicular to the longest direction. This definition of "longitudinal" and "lateral" applies both to the cavity, and to an element being moulded therein.

The cavity also has a height which is defined by the distance between the main walls, and whereby the thickness of the element to be moulded therein will be equal to the height. The height may be constant, whereby the depressions and elevations of the two main plates are opposite yet identical. In an alternative embodiment, the height is not constant, and the distance between the main walls are larger at the lateral centre than at the lateral sides, and an element being moulded therein will be thicker at the middle, for instance will a tire be thicker at the tire tread.

The cavity is defined by the main walls and the edge walls being parts of the housing. The cavity is limited in lateral direction by the edge walls, which are arranged along the length of the cavity. The edge walls may be lower than the height of the cavity, wherein any material added to the cavity may flow out of the cavity, over the edge walls. In embodiments wherein the housing comprises a number of cavities arranged adjacent to each other; the edge wall will be the separation between the cavities. However, if the edge wall is lower than the height of the cavity, then the elements moulded in the cavities will be connected, and needs to be separated from each other after the moulding, preferably in the recess created by the edge wall.

The cavity or cavities may be closed inside the housing, and in such case the cavities are limited in longitudinal direction by two end walls.

By "extending and sloping both laterally and longitudinally" it is in the context of this application meant that each elevations/depressions have a slope both in lateral and longitudinal direction.

By "depression" it is in the context of this application meant a form being concave, that is the wall is moving out of the cavity, and by "elevation" it is meant a form being convex, that is the wall is moving into the cavity. The elevations and depressions of one main wall is opposite to the elevations and depressions of the other main wall, meaning that when one wall moves into the cavity, as an elevation, the opposing part of the opposite wall is moving out of the cavity, as a depression, and vice versa, this will give the cavity a wavy shape.

Any depressions in an element formed in a cavity in such a mould, may be turned or inverted, and thereby the elevations and inverted depressions will bend the element in longitudinal direction. The inverting is known for instance from US 8,632,715 mentioned above. Further, as the depressions and elevations also extend laterally to the mould, when the depressions are inverted, the element will also bend laterally. The element will thus get a double curved shape, which improves the fit to a wheel having a curved tread, such as a bicycle tire. As said above, even if an elastic element may be stretched to fit, an element moulded to have the correct shape will not be in a stretched mode, and therefore not have any inner tensions when attached to a tire. Parts of an element moulded in a mould according to the invention will be stretched or slightly deformed during the inverting process, but once the depressions are completely inverted, any inner tensions of the element are so small that they do not influence the performance of the element.

In a preferred embodiment, each elevation and depression have a gradual slope and rounded top, leaving no sharp edges or corners. This will both ease the release of the element from the mould and the inverting of the depressions to form the resulting curvatures after demoulding.

The slope of the elevations / depressions of the main walls will determine the curvatures of a double curved moulded element after the depressions are inverted. A lateral radius r of the moulded element, being the radius of a crosswise arch of the element after the depressions are inverted, will, amongst others, be determined by the slope of the elevations/ depressions of the main wall in lateral direction. Correspondingly, a longitudinal radius R of the moulded element, being the radius of a circle created by the element after the depressions are inverted, will, amongst others, be determined by the slope of the elevations/depressions of the main wall in longitudinal direction. In a preferred embodiment, the average gradient of the elevation and/or depression may be different in the longitudinal and lateral direction, giving the element a different curve in longitudinal and lateral direction.

In a preferred embodiment, each lateral elevation and depression are symmetrical along lateral plane, and each longitudinal elevation or depression are symmetrical along a longitudinal plane. In the following the lateral plane will also be referred to as an xy-plane, and the longitudinal plane as a yz-plane. As the elevations and depressions are symmetrical in the lateral plane, the top of the elevation or bottom of depression will be centred in the lateral direction of the cavity.

In a preferred embodiment, the form and size of the elevations and depressions are identical, only extending in opposite directions of a given surface-plane of the mould, hereinafter referred to as a 0-plane or a xz-plane. The 0-plane is having in average, equal distance to both main walls. The 0-plane is perpendicular to the longitudinal and lateral plane.

In an alternative embodiment, the elevations and depressions are not identical, they may have different shape, wavelength, average gradient and even different amplitude at their extremity. The wavelength is defined as the longitudinal length between the transition into the elevation or depression and the transition out of the same elevation or depression. Amplitude is defined by the vertical distance from the 0-plane to the highest or lowest point of the elevation or depression, respectively. By "extremity" of a depression or elevation it is herein meant at the top of an elevation and bottom of a depression, that is when the gradient is 0. This may also be referred to as minima or maxima, and thus the amplitude will be the distanced from the 0-plane to the minima or maxima.

In an alternative embodiment, the elevations and depressions can be different as long as the distance along the main wall surface between the edge walls is kept constant and the amplitude is kept proportional to the wavelength.

In a preferred embodiment, the shape of the elevations and depressions of a mould are calculated using an algorithm to create a point cloud. The shape is then imported into a CAD- software where a series of interconnected models deform a tread pattern to match the shape. Once these calculations are performed, the shape of the elevations and depressions, pattern of protrusions and recesses, and thickness of tire or tire tread to be moulded are given, and the mould may be created.

A mould according to the invention is preferably also longitudinal, reflecting the cavity or cavities inside the housing, however, depending on the number of cavities inside the housing, the mould may also be square. In a preferred embodiment, the outside of the housing is flat, meaning that the outside of the mould is shaped as a box. This means that the thickness of the walls of the housing varies according to the depressions and elevations of the cavity, wherein the wall of the housing is thicker when there is an elevation in the main wall of the cavity, and thinner when there is a depression in the main wall of the cavity.

In a preferred embodiment, the elevations and depressions of the main walls in the cavity are arranged alternating along the length of the main walls, more preferred adjacent to each other, leaving no flat area between. A longitudinal cross section of the mould along the yz-plane, will in such an embodiment show the cavity having the form of a wave, more preferred a sine wave. In order to arrange several elements being moulded in the mould, after one another, it is preferred that the ends of the main walls correspond to the beginnings of the main walls, to achieve a continuous wave in the longitudinal direction.

The main walls also have elevations and depressions in lateral direction, and may in an alternative embodiment have several elevations and depressions arranged alternating in the lateral direction. In a preferred embodiment however, a main wall only comprise one depression or elevation in lateral direction, and in such embodiment, a lateral cross section along the xy-plane will show the cavity formed as a convex or concave arch, or a straight line if the cross section is taken in the transition between a depression and an elevation.

The depression(s) and/or elevation(s) may be arranged along the whole length and width of the main walls. Alternatively, both main walls may include a planar surface at the least one side of the depressions and elevations, along the edge wall. This will give the moulded element a flat part along the longitudinal edge, without depressions and elevations.

In a preferred embodiment of the invention, the cavity in the mould has a length corresponding to the circumference of a circle having the longitudinal radius R of an element moulded in the mould, once the depressions are inverted. Thereby, an element moulded in such a mould will fit to a wheel of the given size, and extend along the whole circumference of the wheel.

In another preferred embodiment, the housing comprises at least two parts which may be moved in relation to each other, to create access to the cavity or cavities inside the housing. The two parts may for instance move between an open position and a closed position, wherein the element is to be moulded in the cavity when the parts are in closed position. Alternatively, material to mould the element is added while the parts are in closed position, and the element is removed when the parts are in open position. In yet another embodiment, the parts are arranged on conveyers, wherein the parts are separated at the end of at least one of the conveyers. The conveyors may be identical or different, but the mould must be in closed position sufficiently long for the material to set in the cavity. The time will thus also depend on the chosen material. Preferred materials are elastomeric materials such as rubber or thermoplastic elastomers (TPEs).

In a preferred embodiment, at least one of the main walls of the cavity has protrusions and recesses to mould a pattern of grooves, knobs and sipes in the element to improve the performance of the element when in use. The protrusions and recesses are in addition to the elevations and depressions. The protrusions and recesses may create any pattern and have any shape, unique or repeated, gradually sloped or steep, thick or thin as desired by the manufacturer. The preferred pattern of protrusions and recesses depends on the intended use of the tire tread. In an alternative embodiment, spikes, gravel, electronic components such as sensors, light etc, fibres, weavings, wires or the similar may also be added in the mould to be moulded into the element to provide specific characteristics.

The protrusions and recesses may be in the whole or parts of the main wall. The protrusions and recesses are preferably in longitudinal direction, centred crosswise, giving grooves, knobs and sipes along the middle of the element being moulded, more preferably along the tread. The parts of the main wall on the sides of the protrusions and recesses may comprise shapes to mould labels into the element, such as size, recommended pressure, trademarks etc.

The amplitude of the elevation in the main wall having the pattern of protrusions and recesses may be lower than the amplitude of the depression in the same main wall.

In an alternative embodiment, the main walls are identical and both have protrusions and recesses, and thereby two elements may be moulded at the same time, one element facing one main wall, and the other element facing the other main wall, the elements must be separated after moulding. An inert sheet or the similar may be added during moulding, to separate the elements once the material is set.

As described above, the cavity extends laterally between two opposing edge walls protruding between the main walls in longitudinal direction of the mould. In one embodiment, the height of the edge walls defines the height of the cavity, and thus the thickness of the element to be moulded in the cavity of the mould. In another embodiment, the height of the cavity is determined by other parts of the mould, such as opposing parts of the housing.

In a more preferred embodiment, the distance between the edge walls across the cavity, that is the width of the cavity, varies in relation to the position of the elevations and depressions of the main walls, but the distance between the edge walls along the surface of a main wall will be constant. In such an embodiment, the edge walls are closer to each other at the bottom of a depression or top of an elevation of the main walls, and further apart at the transition between elevation and depression. When the housing comprises several cavities, the edge wall between two adjacent cavities may thus have thicker and thinner parts.

When a number of elevations and depressions are arranged after each other as described above, the edge walls will curve continuously, giving wider and narrower parts of the cavity. The lateral distance from one longitudinal edge of a main wall to the other, following the curve of the main wall, should be equal at all times, meaning that a higher elevation of the main wall will give a shorter distance between the edge walls at the same position. The same regards to a low depression. When the depressions of a moulded element is inverted, and the element is double curved as described above, the curving of the longitudinal edges will even out, and the side edges of the element will appear as even.

Further, the cavity may be designed with sufficient space for adding a reinforcement material along the whole element, such as a mesh or tire carcass, before the element is moulded. The reinforcement material may be longer i both lateral and longitudinal direction than the cavity, and thus protrude out of the cavity, between the side edges, and possibly the end walls. The reinforcement material may be previously coated with elastomeric material.

The mould is made of any convenient material sufficiently hard to withstand the pressure and temperature during the moulding of the tire or tire tread, and all other forces acting on the mould during the process. Further it should be sufficiently hard to create recesses and protrusions in at least one of the main walls, to create a pattern on the moulded tire or tire tread. Finally, the mould should be used several times, and thus the material must withstand wear and cleaning. A possible material is plastic or metal, more preferably steel.

The invention further relates to a method for forming a longitudinal double curved element of elastomeric material, by using a mould as described above.

In a preferred embodiment, the mould comprises two parts, the method comprises the following steps:
a) providing entrance to the cavity,
b) placing elastomeric material into the cavity through the entrance,
c) moving the parts of the mould apart from each other, to provide exit from the cavity, and
d) remove the element from the cavity.

If the housing comprises more than one cavity, then method should comprise the same steps but in relation to all cavities.

In a preferred embodiment the method further comprises a step for pressurizing, heating and/ or cooling the mould between step b) and c). In yet another preferred embodiment, the method may comprises a delay between step b) and c), the delay is to allow the polymeric material to cure, or harden.

In an alternative method, the step for providing an entrance to the cavity, comprises a step for moving the parts of the mould apart from each other, and the method comprises an additional step between step b) and c), for moving the parts of the mould towards each other, to close the cavity. This additional step must be performed before any steps for pressurizing, heating and/or cooling as mentioned above. Such steps will be common when the element is to be moulded by press moulding.

In an alternative method, the parts of the mould comprising the main walls and edge walls are arranged on conveyors, and moved in relation to each other by running the conveyors. In such an embodiment, the polymeric material may be added on one of the parts, and then the other part is pressed upon, whereby excess material will be forced out of the cavity.

In yet an alternative embodiment, the method comprises another step before and/or after step b), for adding other materials, such as a mesh, tire carcass and/or inert sheet to the mould.

If the main walls of the mould both comprises protrusions and recesses in order to mould two elements at the same time, then the method should further comprise steps between step b) and c) for adding material to the lower main wall, adding an inert sheet for separating the elements after moulding, and then adding more material for moulding the second element. Then yet another step should be added after step d) for removing the inert sheet, and separating the elements.

The invention also relates to a longitudinal element of elastomeric material, moulded in a mould as described above, and/or by a method as described above. The element will have elevations and depressions along its length and width, preferably one elevation or depression in lateral direction, and alternatingly elevation and depression in longitudinal direction.

The depressions of the element may be inverted to curve the element in both longitudinal and lateral direction. During for instance transportation and storage it may however, be an advantage to keep the depressions non-inverted, as several tire treads may be stacked on top of each other, and demand less space.

Upon usage, the depressions are forced upwards beyond the 0-plane, until they flip/invert and become an elevation. The elevations and flipped/inverted depressions will form the element and curve it both in longitudinal and lateral direction, having a radius r in lateral direction and radius r in longitudinal direction. The length of an element according to the invention is preferably in proportion to the longitudinal slope of the depressions and elevations, to make the element run along the circumference of a circle having the radius R.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

### Example

The invention will now be described with the help of the enclosed figures, showing a mould and an element in the form of a tire tread according to the present invention.

The different parts of the figure are not necessarily in scale to each other, as the figure is merely for illustrating the invention.

The invention will in the following be described with reference to the enclosed figures, where
Figure 1a shows a part of a mould according to the present invention,
Figure 1b shows a part of another mould according to the present invention,
Figure 2 shows a segment of the mould in Figure 1a, from above with contour lines,
Figure 3 shows a lateral cross section of another embodiment of a mould according to the present invention,
Figure 4 shows a longitudinal cross section of the mould shown in Fig. 3,
Figure 5 shows a cross section of the mould shown in Fig. 3 and 4, the cross section is parallel to the top and bottom of the mould,
Figure 6 shows a segment of an element moulded in the mould shown in Fig. 3-5, in perspective,
Figure 7 shows a segment of an element moulded in the mould shown in Fig. 1-5, from a side, and
Figure 8 shows a segment of the element in Fig. 7, after depressions are inverted.

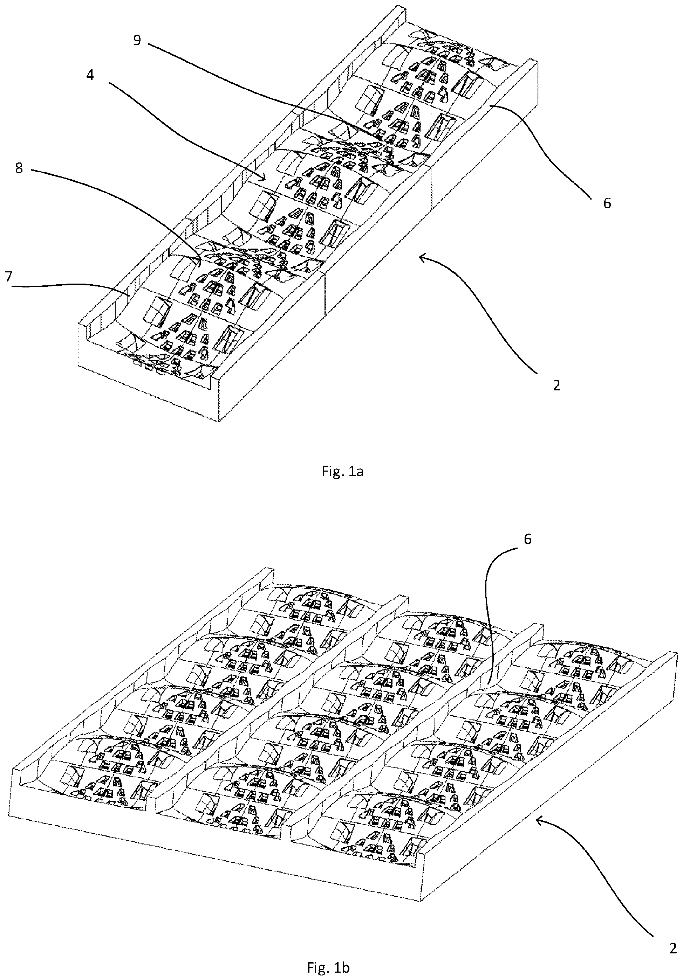

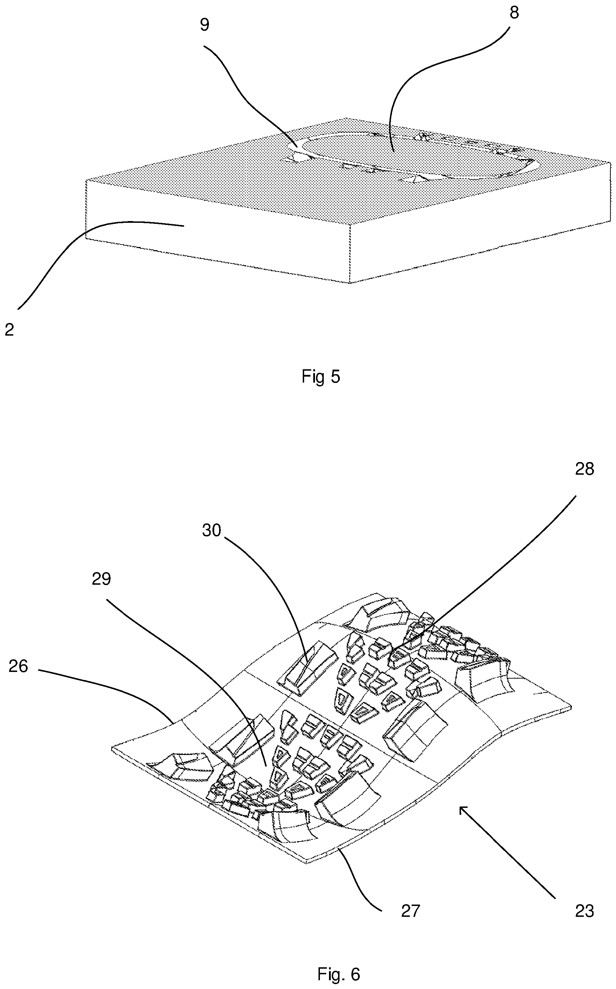

Figures 1a-5 show different embodiments of a mould for moulding a longitudinal double curved element of elastomeric material, such as a tire tread, according to the present invention. Figure 1b shows an embodiment for moulding several longitudinal double curved elements simultaneously. Figures 6-8 show a tire tread being moulded in a mould such as shown in Figures 1. For clarity reasons, identical or similar parts of the mould are given the same reference number in all embodiments.

All embodiments of the mould comprise a housing of two parts 1, 2, wherein the two parts may be removed from each other. The housing has a flat base and top, and includes a longitudinal cavity 3 extending between two opposing main walls 4, 5 and two opposing edge walls 6, 7, wherein one main wall 4, 5 is arranged on each part 1, 2 of the housing, and thereby access to the cavity 3 is created by moving the parts 1, 2 away from each other. The main walls 4, 5 have elevations 8 and depressions 9 extending both laterally and longitudinally of the cavity 3, wherein one elevation 8 or depression 9 is arranged in lateral direction, and several elevations and depressions are arranged alternating adjacent to each other in longitudinal direction. The elevations 8 and depressions 9 of one main wall 3 is opposite to the elevations 8 and depressions 9 of the other wall 4, giving the cavity 3 between the main walls a wavy shape in longitudinal direction.

In the shown embodiments, one of the main walls 4 have recesses and holes 10 to create a pattern 30 on a tire tread 23 being moulded therein, wherein the pattern 30 will improve the grip once the tire tread 23 is mounted on a wheel.

Figure 1a and b shows a part 2 of the housing of the mould, removed from the other part 1. The part is shown in perspective, with the main wall 4 facing upwards. The main wall 4 of the shown part 2 includes protrusions and recesses, and will give give the element a pattern 30 of grooves and sipes on one side, for a good grip once the element is mounted on a tire. The shown part in figure 1a has one cavity with three elevations 8 and three depressions 9 in longitudinal direction, each elevation and depression extends along the whole lateral direction of the cavity.

The shown part in Figure 1b have three cavities, each having four elevations 8 and four depressions 9 in longitudinal direction, each elevation and depression extends along the whole lateral direction of the cavity. The cavities are separated from each other by edge walls 6, the height of the edge walls 6 correspond in the shown embodiment with the height of the cavity, and any elements formed therein will be removed from the mould as separate elements.

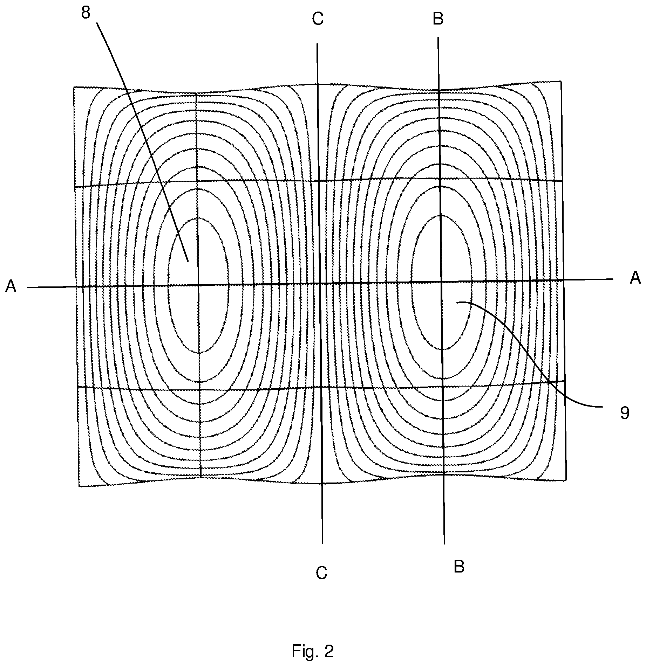

Figure 2 shows a section of the mould in Figure 1, from above, and contour lines are added to indicate the gradient of the slope of the elevation 8 and depression 9. As can be seen from the contour lines, each elevation and depression has a slope in the lateral direction as well as in the longitudinal direction. Depressions and elevations are arranged alternating and adjacent to each other in longitudinal direction, and in the transition from elevation to depression and vice versa, there will be a transition line with no elevation in either direction. A transition line is indicated in Figure 2 as C-C.

Further, in any longitudinal plane taken through a mould shown in the Figures, such as indicated by A-A in Figure 2, each elevation and depression is symmetrical about a line running through its highest or lowest point. Each elevation and depression is also symmetrical about a line running through its highest or lowest point, in any lateral plane taken through the mould, for instance as indicated by B-B in Figure 2. The average gradient of the elevations and depressions is not identical in the longitudinal and lateral direction, as the lateral and longitudinal curvature of the element to be moulded are not identical.

In the shown embodiment, the opposing edge walls 6, 7 of the cavity are closer to each other at the bottom of a depression or at the top of an elevation of the main walls, and further from each other at the transition between elevation and depression. This is shown in Figure 1 as the walls 6, 7 curves along the longitudinal direction. This is also shown in Figure 2, wherein the edges of the section are closer along line B-B which is at the top/bottom of an elevation/depression than along line C-C which is at a transition between an elevation/depression. As the distance between the edge walls 6, 7 varies, the distance between the edge walls along the surface of the main wall will be constant.

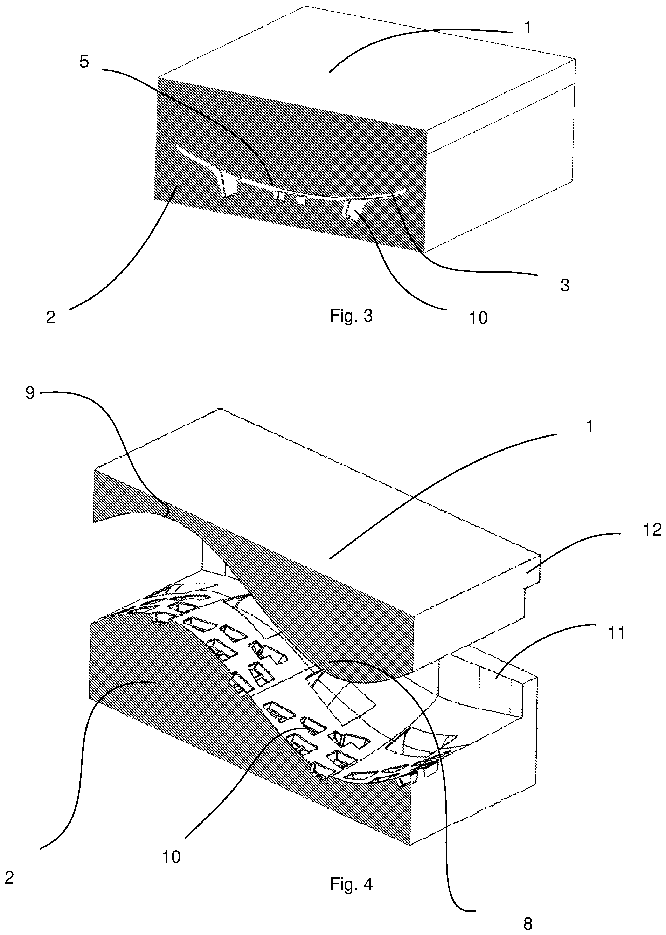

Figure 3 shows a lateral cross section of a mould, wherein the two parts 1, 2 of the housing are arranged in relation to each other and encloses the cavity 3. A lateral cross section is also referred to as a cross section in XY plane. Each elevation 8 or depression 9 extends along the whole lateral direction of the cavity, that is from edge wall 6 to edge wall 7, and thus the lateral cross section has the form of an arc. In Figure 3 it is shown that the main wall 4 of part 2 has a number of recesses and holes 10, to create a pattern on the tire tread.

Figure 4 shows a longitudinal cross section of a part of a mould, wherein the two parts 1, 2 of the housing are arranged exploded, that is in distance to each other. A longitudinal cross section is also referred to as a cross section in YZ plane. As several elevation 8 and depression 9 are arranged alternating and adjacent to each other along the longitudinal direction of the cavity, the cross section has the form of an wave.

Further on Figure 4, it is shown that the edge wall 6 is a part of a side wall 11 of one part 2 of the housing. The other part 1 has a protruding flange 12, to be supported by the side wall 11 once the mould is mounted. The height of the edge wall 6, and thus the thickness of the cavity 3, will be given by the design of the side wall 11 and flange 12, as will be obvious to a skilled person. When a tire tread should be moulded in the mould, upper part 1 is removed, elastomeric material is added, part 1 is replaced, and pressure is added on top of part 1, until the flange 12 rest upon the side wall 11.

Figure 5 shows a cross section along a 0 plane for the cavity, also referred to as the xz plane. As the cavity has the form of an arc in lateral section, and a wave in the longitudinal section, a cross section in the xz plane shows an elevation 8 of one part 1 of the mould, (the upper part in Figure 5) as well as a depression 9 of the other part of the mould 2, wherein the elevation 8 is arranged above , and partly in, the depression 9.

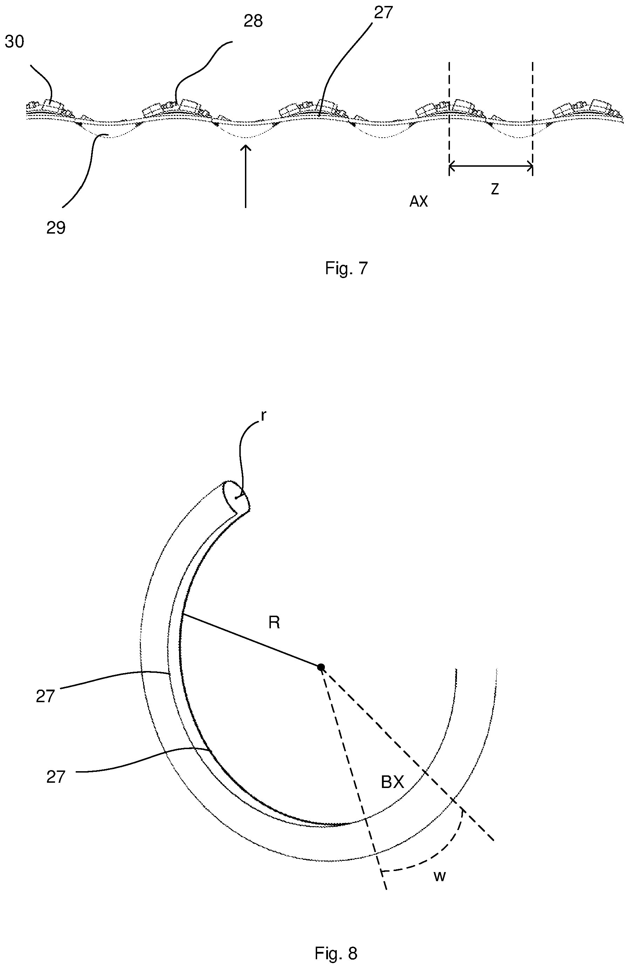

A tire tread 23 moulded in the cavity 3 of a mould according to figures 1 or 2 is shown in Figures 6 and 7, wherein figure 6 shows a section of the tire tread 23 in perspective from above, and Figure 7 shows the tire tread from one side. The tire tread 23 will have a wavy form with elevations 28 and depressions 29 in longitudinal direction, and a pattern 30 on one side.

When the tire tread is to be used, the depressions 29 should be pressed from the lower side and upwards, as indicated by an arrow in Figure 7, until they are inverted. Due to elastic properties of the material of the tire tread, this inverting procedure is possible. A small amount of strain energy may still be persistent after inverting, mainly due to the fact that the article does not have zero thickness. Then the tire tread will curve as shown in Figure 8. For clarity reasons, the tire tread 23 in Figure 8 is shown with an even surface, that is without pattern 30.

Once the depressions 29 of the tire tread 23 are inverted, it will be double curved, having a radius r in lateral direction, and radius R in longitudinal direction. The radii r and R are determined among other things by the slope of the elevations and depressions in lateral direction and longitudinal direction of the cavity. The gradient of the slopes are indicated by the contour lines in Figure 2. As the distance between the edge walls across the cavity varies, but the distance between the edge walls along the surface of the main walls is constant, the lateral distance from one edge of the element to the other, once the depressions are inverted, is constant. This is shown as a constant side edge 27, 27 in Figure 8.

As shown in Figure 7 and 8, any segment Ax with longitudinal length Z of the element yields a corresponding segment Bx of the double curved element with angle W after any depressions are inverted, where angle W and length Z is proportional.

In the shown figures, the shape of the elevations are identical to the depressions. However, in an alternative embodiment, the shapes may be different, but the shape of any elevation or depression may be such as to yield a segment of the desired double curved shape, meaning that if a segment Ax is defined as between the transition into an elevation or depression and the transition out of the same elevation or depression, the segment would correspond to any segment Bx of a double curved shape with Angle W proportional to longitudinal length Z of Ax. A double curved shape with radius R can as such be obtained with elevations and depressions of varying amplitudes and wavelengths by adjusting the number of elevations and depression on the element in total.

When a mould as shown in Fig. 1-5 should be used to mould a tire tread as shown in Fig 6-8, a part 1 of the housing is removed from part 2, to provide entrance to the cavity 3. A suitable amount of elastomeric material is then be added to the cavity, before the first part 1 is replaced, closing the access to the cavity. Once the cavity is closed, pressure should be added, preferably on top of part 1, until the flange 12 of part 1 is resting against the side wall 11 of the lower part 12. The pressure may be about 16 MPa, preferably exerted by a hydraulic force. After a predetermined time, part 1 is removed again to provide access to the cavity, and the moulded tire tread may be removed. The curing or hardening time may for instance be about 5 - 15 minutes, depending on the elastomeric material. Even if the method is described above with reference to one cavity, the same applies if the housing comprises more cavities.

The example above is given to illustrate the invention and should not be used to interpret the following claims limiting. The scope of the invention is not limited by the example give above, but the following clams. Modifications and amendments of the invention, being obvious to a person skilled in the art, should also be included in the scope of the invention.

## Claims

1. Mould for a longitudinal element of elastomeric material, the mould comprises a housing (1, 2) including at least one longitudinal inner cavity (3) extending between at least two opposing main walls (4, 5) and two opposing edge walls (6, 7), **characterized in that**
the main walls (4, 5) have elevations (8) wherein each elevation (8) is extending and sloping both laterally and longitudinally of the cavity (3), and depressions (9) wherein each depression (9) is extending and sloping both laterally and longitudinally of the cavity, the elevations (8) and depressions (9) are arranged alternating along the length of the mould, and
wherein an elevation (8) of one wall (4) is opposite to a depression (9) of the other wall (5).

2. Mould according to claim 1, wherein the elevations (8) and depressions (9) are arranged adjacent to each other.

3. Mould according to any one of the preceding claims, wherein the main walls (4, 5) have one elevation (8) or depression (9) in lateral direction and a number of elevations (8) and depressions (9) alternating in longitudinal direction.

4. Mould according to any one of preceding claims, wherein each elevation and/or depression have a gradual slope and rounded top.

5. Mould according to any one of preceding claims, wherein the form and size of the elevations (8) and depressions (9) are identical, only extending in opposite directions of the mould.

6. Mould according to any one of the preceding claims, wherein the distance between the edge walls (6, 7) across the cavity (3) is smaller at the bottom of a depression (9) or at the top of an elevation (8) of the main walls (4, 5), and larger at the transition between elevation and depression, and in that the distance between the edge walls along the surface of a main wall is constant.

7. Mould according to any one of the preceding claims, wherein the housing comprises at least two parts (1, 2) which may be moved in relation to each other, to create access to the cavity (3) in the housing.

8. Method for forming a longitudinal element (23) of elastomeric material, by using a mould according to any one of claim 1-7, wherein the mould comprises at least two parts (1, 2), wherein the method comprises the following steps:
a) providing entrance to the cavity (3),
b) placing elastomeric material into the cavity,
c) moving parts of the mould in relation to each other, to provide access to the cavity, and
d) remove the longitudinal element (23) from the cavity (3).

9. Method according to claim 8, wherein the method further comprises a step for pressurizing, heating and/or cooling the mould between step b) and c).

10. Method according to claim 8 or 9, wherein the step a) comprises a step for moving the parts (1, 2) of the mould apart from each other, and the method further comprises an additional step between step b) and c), for moving the parts (1, 2) of the mould towards each other, to close the cavity (3).

11. Method according to any one of claims 8-10, wherein the method further comprises a delay between step c) and d).

12. Longitudinal elastomeric element (23) having at least one curvature in longitudinal direction and one curvature in lateral direction, wherein the element is moulded in a mould according to claims 1-7.

## Patentansprüche

1. Form für ein längsgerichtetes Element aus Elastomermaterial, wobei die Form ein Gehäuse (1, 2) umfasst, das mindestens einen längsgerichteten Innenhohlraum (3) beinhaltet, der sich zwischen mindestens zwei gegenüberliegenden Hauptwänden (4, 5) und zwei gegenüberliegenden Randwänden (6, 7) erstreckt, **dadurch gekennzeichnet, dass**
die Hauptwände (4, 5) Erhebungen (8), wobei sich jede Erhebung (8) sowohl seitlich als auch längsgerichtet des Hohlraums (3) erstreckt und geneigt ist, und Vertiefungen (9), wobei sich jede Vertiefung (9) sowohl seitlich als auch längsgerichtet des Hohlraums erstreckt und geneigt ist, wobei die Erhebungen (8) und Vertiefungen (9) abwechselnd entlang der Länge der Form angeordnet sind, und
wobei eine Erhebung (8) der einen Wand (4) gegenüber einer Vertiefung (9) der anderen Wand (5) ist.

2. Form nach Anspruch 1, wobei die Erhebungen (8) und Vertiefungen (9) nebeneinander angeordnet sind.

3. Form nach einem der vorherigen Ansprüche, wobei die Hauptwände (4, 5) eine Erhebung (8) oder Vertiefung (9) in seitlicher Richtung und eine Anzahl von Erhebungen (8) und Vertiefungen (9) aufweisen, die sich längsgerichtet abwechseln.

4. Form nach einem der vorherigen Ansprüche, wobei jede Erhebung und/oder Vertiefung eine allmähliche Neigung und eine abgerundete Oberseite aufweist.

5. Form nach einem der vorherigen Ansprüche, wobei die Form und Größe der Erhebungen (8) und Vertiefungen (9) identisch sind und sich nur in entgegengesetzte Richtungen der Form erstrecken.

6. Form nach einem der vorherigen Ansprüche, wobei der Abstand zwischen den Randwänden (6, 7) über den Hohlraum (3) an dem Boden einer Vertiefung (9) oder an der Oberseite einer Erhebung (8) der Hauptwände (4, 5) kleiner und an dem Übergang zwischen Erhebung und Vertiefung größer ist und dass der Abstand zwischen den Randwänden entlang der Oberfläche einer Hauptwand konstant ist.

7. Form nach einem der vorherigen Ansprüche, wobei das Gehäuse zumindest zwei Teile (1, 2) umfasst, die in Bezug aufeinander bewegt werden können, um einen Zugang zu dem Hohlraum (3) in dem Gehäuse zu schaffen.

8. Verfahren zum Bilden eines längsgerichteten Elements (23) aus Elastomermaterial unter Verwendung einer Form nach einem der Ansprüche 1-7, wobei die Form mindestens zwei Teile (1, 2) umfasst, wobei das Verfahren die folgenden Schritte umfasst:
a) Bereitstellen eines Zugangs zu dem Hohlraum (3),
b) Platzieren von Elastomermaterial in dem Hohlraum,
c) Bewegen von Teilen der Form in Bezug aufeinander, um Zugang zu dem Hohlraum bereitzustellen, und
d) Entfernen das längsgerichteten Element (23) aus dem Hohlraum (3).

9. Verfahren nach Anspruch 8, wobei das Verfahren ferner einen Schritt eines Unterdrucksetzens, Erwärmens und/oder Kühlens der Form zwischen Schritt b) und c) umfasst.

10. Verfahren nach Anspruch 8 oder 9, wobei der Schritt a) einen Schritt eines Auseinanderbewegens der Teile (1, 2) der Form umfasst und das Verfahren ferner einen zusätzlichen Schritt zwischen Schritt b) und c) eines Bewegens der Teile (1, 2) der Form aufeinander zu umfasst, um den Hohlraum (3) zu schließen.

11. Verfahren nach einem der Ansprüche 8-10, wobei das Verfahren ferner eine Verzögerung zwischen Schritt c) und d) umfasst.

12. Längsgerichtetes elastomeres Element (23), das mindestens eine Krümmung in Längsrichtung und eine Krümmung in Querrichtung aufweist, wobei das Element in einer Form nach den Ansprüchen 1-7 geformt wird.

## Revendications

1. Moule pour un élément longitudinal en matériau élastomère, le moule comprend un logement (1, 2) incluant au moins une cavité interne longitudinale (3) s'étendant entre au moins deux parois principales opposées (4, 5) et deux parois de bord opposées (6, 7),
**caractérisé en ce que**
les parois principales (4, 5) présentent des bosses (8), dans lequel chaque bosse (8) s'étend et est inclinée à la fois latéralement et longitudinalement par rapport à la cavité (3), et des creux (9) dans lequel chaque creux (9) s'étend et est incliné à la fois latéralement et longitudinalement par rapport à la cavité, les bosses (8) et les creux (9) sont agencés en alternance sur la longueur du moule, et
dans lequel une bosse (8) d'une paroi (4) est opposée à un creux (9) de l'autre paroi (5).

2. Moule selon la revendication 1, dans lequel les bosses (8) et les creux (9) sont agencés de manière adjacente les uns par rapport aux autres.

3. Moule selon l'une quelconque des revendications précédentes, dans lequel les parois principales (4, 5) présentent une bosse (8) ou un creux (9) en direction latérale et un certain nombre de bosses (8) et de creux (9) alternés en direction longitudinale.

4. Moule selon l'une quelconque des revendications précédentes, dans lequel chaque bosse et/ou creux présente une pente progressive et un sommet arrondi.

5. Moule selon l'une quelconque des revendications précédentes, dans lequel la forme et la taille des bosses (8) et des creux (9) sont identiques, ne s'étendant que dans des directions opposées du moule.

6. Moule selon l'une quelconque des revendications précédentes, dans lequel la distance entre les parois de bord (6, 7) sur l'ensemble de la cavité (3) est plus petite au fond d'un creux (9) ou au sommet d'une bosse (8) des parois principales (4, 5), et plus grande à la transition entre la bosse et le creux, et en ce que la distance entre les parois de bord le long de la surface d'une paroi principale est constante.

7. Moule selon l'une quelconque des revendications précédentes, dans lequel le logement comprend au moins deux parties (1, 2) qui peuvent être déplacées l'une par rapport à l'autre, pour créer un accès à la cavité (3) dans le logement.

8. Procédé de formation d'un élément longitudinal (23) en matériau élastomère, au moyen d'un moule selon l'une quelconque des revendications 1-7, dans lequel le moule comprend au moins deux parties (1, 2), dans lequel le procédé comprend les étapes suivantes :
a) la fourniture d'une entrée dans la cavité (3),
b) la mise en place d'un matériau élastomère dans la cavité,
c) le déplacement de parties du moule les unes par rapport aux autres, pour permettre l'accès à la cavité, et
d) le retrait de l'élément longitudinal (23) de la cavité (3).

9. Procédé selon la revendication 8, dans lequel le procédé comprend en outre une étape de mise sous pression, de chauffage et/ou de refroidissement du moule entre les étapes b) et c).

10. Procédé selon la revendication 8 ou 9, dans lequel l'étape a) comprend une étape d'écartement des parties (1, 2) du moule l'une par rapport à l'autre, et le procédé comprend en outre une étape supplémentaire entre les étapes b) et c), de rapprochement des parties (1, 2) du moule l'une de l'autre, pour fermer la cavité (3).

11. Procédé selon l'une quelconque des revendications 8-10, dans lequel le procédé comprend en outre un retard entre les étapes c) et d).

12. Élément élastomère longitudinal (23) présentant au moins une courbure en direction longitudinale et une courbure en direction latérale, dans lequel l'élément est moulé dans un moule selon les revendications 1-7.
